# FASCICULE DE BREVET EUROPEEN

(11) **EP 4 078 751 B1**
(45) Date de publication et mention de la délivrance du brevet: **20.08.2025**
(21) Numéro de dépôt: 20816553.0
(22) Date de dépôt: 06.11.2020
(51) Int. Cl.: H02G 11/00, B60L 53/16

(54) **VÉHICULE À CÂBLE ÉLECTRIQUE DE RECHARGE PASSANT PAR UNE FEUILLURE DE PORTE LATÉRALE**
FAHRZEUG MIT EINEM ELEKTRISCHEN LADEKABEL, DAS DURCH EINE SEITENTÜRNUT GEHT
VEHICLE WITH ELECTRIC CHARGING CABLE PASSING THROUGH A SIDE DOOR RABBET

(30) Priorité: 20.12.2019 FR 1915345
(43) Date de publication de la demande: 26.10.2022
(73) Titulaire: Stellantis Auto SAS, 78300 Poissy (FR)
(72) Inventeur: LE FLOCH, Bertrand, 91140 VILLEBON SUR YVETTE (FR); MICHEL, Thierry, 78110 LE VESINET (FR)
(74) Mandataire: BCIP
(86) Numéro de dépôt international: PCT/FR2020/052028
(87) Numéro de publication internationale: WO 2021/123523

(56) Documents cités:
- EP-A1- 2 505 417
- EP-A1- 2 506 378
- DE-A1- 102011 116 769
- FR-A1- 2 961 143

## Description

### Domaine technique de l'invention

L'invention concerne les véhicules à batterie(s) rechargeable(s) par couplage à des prises d'alimentation externes.

### Etat de la technique

Le document FR 2 961 143 divulgue un véhicule comprenant une structure comprenant une feuillure délimitant un passage latéral dont l'accès est contrôlé par une porte latérale et une batterie rechargeable couplée à un câble électrique comprenant une prise électrique destinée à être connectée à une prise d'alimentation externe. La structure comprend aussi un logement interne communiquant avec l'extérieur par une ouverture définie dans ladite feuillure et logeant au moins une partie dudit câble électrique avec sa prise électrique dans une position rangée tout en permettant son extraction en vue de connecter ladite prise électrique à ladite prise d'alimentation.

Certains véhicules, éventuellement de type automobile, comprennent un groupe motopropulseur (ou GMP) tout électrique ou hybride (électrique/non électrique) comportant au moins une machine motrice électrique qui a besoin d'énergie électrique pour fonctionner. Cette énergie électrique est notamment fournie par une batterie rechargeable via un onduleur généralement situé dans le compartiment moteur du véhicule. Cette batterie est couplée à un circuit d'alimentation auquel est aussi couplée une prise électrique (éventuellement de type combo) destinée à être raccordée à une prise d'alimentation externe d'un poste de recharge ou d'un réseau d'alimentation électrique.

Initialement, la prise électrique était installée fixement sur la carrosserie du véhicule, derrière une trappe, et son couplage à une prise d'alimentation externe se faisait via un câble électrique de recharge qui devait être stocké dans le véhicule (par exemple dans un coffre). Cette solution présentait plusieurs inconvénients. En effet, il fallait que le câble électrique de recharge soit toujours présent dans le véhicule, et qu'en outre il soit facilement accessible (y compris lorsque son lieu de stockage était fort encombré).

Il a été proposé dans le document brevet FR-A1 3071459 de définir dans le seuil de coffre d'une voiture, juste sous la zone où est logée l'extrémité arrière du volet de coffre lorsque ce dernier est fermé, un logement accessible via une trappe ne pouvant être ouverte que lorsque le volet de coffre est au moins partiellement ouvert, et logeant un câble électrique de recharge connecté au circuit d'alimentation de la voiture et comprenant une prise électrique destinée à être connectée à une prise d'alimentation externe. Ainsi, le câble électrique de recharge est toujours présent dans le véhicule, et son accessibilité ne dépend plus de l'encombrement du coffre. Cependant, cette solution s'avère relativement onéreuse du fait qu'elle nécessite la définition d'un logement dans le seuil de coffre et l'installation d'une trappe avec des moyens d'étanchéité. En outre, cette solution impose systématiquement que le conducteur de la voiture se déplace jusqu'au coffre arrière, puis ouvre au moins partiellement le volet de coffre, puis ouvre la trappe, pour pouvoir déployer le câble électrique de recharge. Enfin, cette solution nécessite une importante longueur de câble électrique de recharge, ce qui induit un surcoût et une augmentation du poids de la voiture qui pénalise sa consommation.

L'invention a donc notamment pour but d'améliorer la situation.

### Présentation de l'invention

Elle propose notamment à cet effet un véhicule comprenant une structure comportant une feuillure délimitant un passage latéral dont l'accès est contrôlé par une porte latérale et une batterie rechargeable couplée à un câble électrique comprenant une prise électrique destinée à être connectée à une prise d'alimentation externe.

Ce véhicule se caractérise par le fait que sa structure comprend aussi un logement interne communiquant avec l'extérieur par une ouverture définie dans la feuillure et logeant au moins une partie du câble électrique avec sa prise électrique dans une position rangée tout en permettant son extraction en vue de connecter la prise électrique à la prise d'alimentation.

Grâce à l'invention, le conducteur qui veut effectuer une recharge n'a qu'à ouvrir légèrement la porte latérale (s'il ne l'a pas déjà fait pour sortir de l'habitacle) pour sortir une partie du câble électrique avec sa prise électrique du logement interne de la feuillure associée, en vue de connecter cette prise électrique à une prise d'alimentation externe, puis il peut refermer la porte latérale.

Le véhicule selon l'invention peut comporter d'autres caractéristiques qui peuvent être prises séparément ou en combinaison, et notamment :
- il peut comprendre, à proximité du logement interne, un enrouleur auquel est couplé le câble électrique afin de pouvoir être enroulé/désenroulé ;
- le logement interne est défini en-dessous d'un renfoncement de la structure, défini partiellement dans la feuillure, partiellement masqué par une poignée d'actionnement de la porte latérale lorsque cette dernière est fermée, et permettant le passage du câble électrique, porte latérale fermée, lorsque la prise électrique est connectée à la prise d'alimentation ;
- il peut comprendre un guide solidarisé fixement à la feuillure, entre l'ouverture et le renfoncement, et logeant et retenant temporairement une partie du câble électrique tout en la guidant de l'ouverture jusqu'au renfoncement, lorsque la prise électrique est connectée à la prise d'alimentation ;
- la feuillure peut définir au-dessus du logement interne un logement additionnel dans lequel est installé fixement un mécanisme de verrouillage destiné à immobiliser la porte latérale dans sa position fermée ;
- le guide peut être solidarisé fixement à une portion de paroi de la feuillure qui délimite partiellement le logement additionnel ;
- le logement interne peut être partiellement délimité par une partie de la structure qui définit une aile arrière ;
- en variante, le logement interne peut être partiellement délimité par une partie d'un montant définissant un pied milieu de la structure ;
- il peut comprendre un groupe motopropulseur (ou GMP) comprenant au moins une machine motrice électrique utilisant de l'énergie électrique stockée dans la batterie rechargeable ;
- il peut être de type automobile.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue de côté, une petite partie d'un exemple de véhicule selon l'invention, avec son câble électrique de recharge sorti du logement interne de sa structure, alors que sa porte latérale est fermée,
[Fig. 2] illustre schématiquement, dans une vue de côté, la partie du véhicule de la figure 1 avec son câble électrique rangé dans le logement interne de sa structure, et avec sa porte latérale ouverte, et
[Fig. 3] illustre schématiquement, dans une vue de côté, la partie du véhicule de la figure 1 avec son câble électrique sorti du logement interne de sa structure, et avec sa porte latérale ouverte.

### Description détaillée de l'invention

L'invention a notamment pour but de proposer un véhicule V comprenant une structure SV, délimitant un habitacle dont l'accès est contrôlé par au moins une porte latérale PL, et une batterie rechargeable couplée à un câble électrique de recharge CE facilement accessible.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule (terrestre, maritime (ou fluvial), ou aérien) comprenant une structure, délimitant un habitacle dont l'accès est contrôlé par au moins une porte latérale, et une batterie rechargeable.

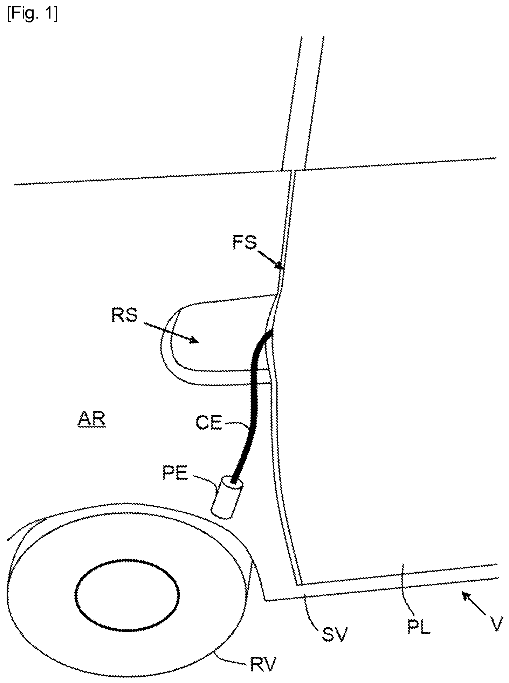

On a schématiquement représenté sur la figure 1 une petite partie latérale d'un exemple de véhicule V selon l'invention (ici de type automobile). Ce véhicule V comprend une structure SV qui comporte au moins une feuillure FS délimitant un passage latéral dont l'accès est contrôlé par une porte latérale (ou portière) PL (ici en position fermée). Ce passage latéral permet d'accéder à un habitacle délimité par la structure SV du véhicule V et pouvant accueillir au moins un passager.

La feuillure FS est destinée à loger un bord périphérique de la porte latérale (ou portière) PL lorsque cette dernière (PL) est en position fermée. Elle est donc masquée lorsque la porte latérale PL est fermée (voir figure 1).

Bien que cela n'apparaisse pas entièrement sur les figures 1 à 3, le véhicule V comprend aussi une batterie rechargeable qui est couplée à un câble électrique (de recharge) CE comprenant une prise électrique PE destinée à être connectée à une prise d'alimentation externe, par exemple d'un poste de recharge ou d'un réseau d'alimentation électrique.

Cette batterie rechargeable est couplée à au moins une machine motrice électrique du groupe motopropulseur (ou GMP) du véhicule V afin de l'alimenter en énergie électrique, notamment pour qu'elle l'utilise pour induire son déplacement.

On considère dans ce qui suit, à titre d'exemple non limitatif, que le GMP du véhicule est hybride, et plus précisément thermique/électrique. Mais il pourrait être hybride électrique/non électrique ou bien tout électrique.

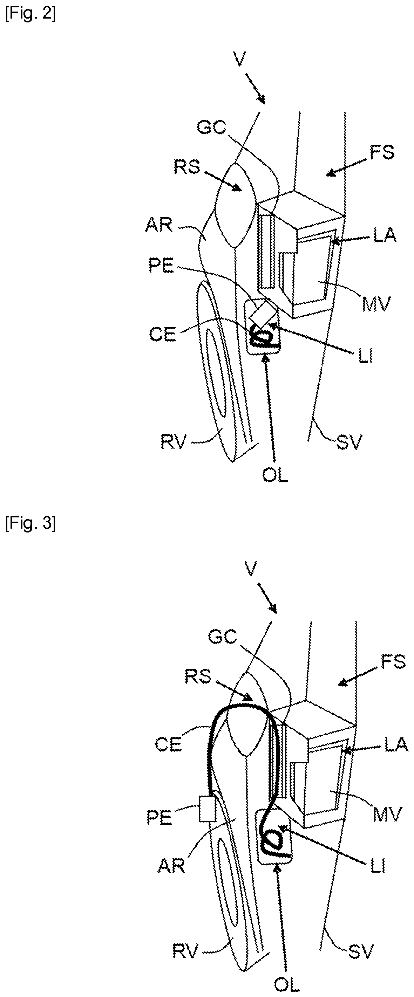

Cette batterie rechargeable est préférentiellement couplée à une première extrémité du câble électrique (de recharge) CE via un circuit d'alimentation. Comme illustré sur les figures 2 et 3, la structure SV du véhicule V comprend aussi un logement interne LI qui communique avec l'extérieur par une ouverture OL définie dans la feuillure FS. Ce logement interne LI loge au moins une partie du câble électrique (de recharge) CE avec sa prise électrique PE dans une position rangée (illustrée sur la figure 2). De plus, ce logement interne LI permet l'extraction d'une partie du câble électrique CE avec sa prise électrique PE, via l'ouverture OL, en vue de connecter cette dernière (PE) à une prise d'alimentation externe pour recharger la batterie rechargeable.

Ainsi, lorsque le conducteur du véhicule V veut effectuer une recharge, il n'a qu'à ouvrir légèrement la porte latérale PL (s'il ne l'a pas déjà fait pour sortir de l'habitacle) afin de sortir une partie du câble électrique CE avec sa prise électrique PE du logement interne LI de la feuillure FS associée, en vue de connecter cette prise électrique PE à une prise d'alimentation externe. Une fois le câble électrique CE sorti, le conducteur peut refermer la porte latérale PL (et éventuellement la verrouiller). Par ailleurs, on notera qu'il n'y a plus de trappe à ouvrir pour accéder au câble électrique CE, ce qui facilite l'accès et permet de réduire les coûts.

Bien que cela n'apparaisse pas sur les figures 1 à 3, le véhicule V peut comprendre à proximité du logement interne LI un enrouleur auquel est couplé le câble électrique CE afin de pouvoir être enroulé/désenroulé. Par exemple, cet enrouleur peut être solidarisé fixement à la structure SV, sur une face interne (invisible de l'extérieur). Cela permet de faciliter les extractions et replacements du câble électrique CE hors du, et dans le, logement interne LI. En outre, cela permet de réduire l'encombrement total du câble électrique CE.

On notera, comme illustré sur les figures 2 et 3, que le logement interne LI est défini en-dessous d'un renfoncement RS de la structure SV qui est défini partiellement dans la feuillure FS et partiellement masqué par une poignée d'actionnement (non représentée) de la porte latérale PL lorsque cette dernière (PL) est fermée. Ce renfoncement RS permet alors avantageusement le passage du câble électrique CE, sans pincement, alors que la porte latérale PL est fermée, lorsque la prise électrique PE est connectée à une prise d'alimentation.

En présence de la dernière option, le véhicule V peut aussi comprendre un guide GC solidarisé fixement à la feuillure FS, entre l'ouverture OL et le renfoncement RS. Ce guide GC est agencé de manière à loger et retenir temporairement une partie du câble électrique CE tout en la guidant de l'ouverture OL jusqu'au renfoncement RS, lorsque la prise électrique PE est connectée à une prise d'alimentation. On comprendra que c'est le conducteur du véhicule V qui, une fois le câble électrique CE sorti du logement interne LI, le couple au guide GC. Par exemple, ce guide GC peut comprendre une gorge ouverte adaptée au logement d'une portion du câble électrique CE et comportant éventuellement en bordure de gorge des petites protubérances permettant de retenir cette portion. Par exemple, ce guide GC peut être réalisé par moulage (ou injection) d'une matière plastique.

Grâce à ce guide GC une portion du câble électrique CE est maintenue dans une position prédéfinie (sensiblement verticale) en sortie de l'ouverture OL et en entrée du renfoncement RS (voir figure 3), ce qui garantit que ce câble électrique CE ne sera pas pincé lors de la fermeture de la porte latérale PL.

On notera également, comme illustré non limitativement sur les figures 2 et 3, que la feuillure FS peut définir au-dessus du logement interne LI un logement additionnel LA dans lequel est installé fixement un mécanisme de verrouillage MV destiné à immobiliser la porte latérale PL dans sa position fermée. Par exemple et comme illustré non limitativement sur les figures 2 et 3, une partie des parois délimitant le logement additionnel LA peut être placée au niveau du renfoncement RS.

En présence de la dernière option, le guide GC peut être solidarisé fixement à une portion de paroi de la feuillure FS qui délimite partiellement le logement additionnel LA. Cette solidarisation fixe peut se faire par vissage, clippage ou collage, par exemple. On tire ainsi partie du positionnement de cette portion de paroi entre le logement additionnel LA et le renfoncement RS pour fixer le guide GC à l'endroit le mieux adapté à sa fonction de guidage (illustrée sur la figure 3).

Par exemple et comme illustré non limitativement sur les figures 1 à 3, le logement interne LI peut être partiellement délimité par une partie de la structure SV qui définit une aile arrière AR du véhicule V et qui est notamment située au-dessus d'un passage de roue RV. Dans ce cas, l'éventuel enrouleur peut, par exemple, être solidarisé fixement à une face interne de l'aile arrière AR, par vissage, collage ou clippage.

Mais cela n'est pas obligatoire. En effet, dans une variante de réalisation le logement interne LI pourrait être partiellement délimité par une partie d'un montant définissant un pied milieu de la structure SV, et situé à l'interface entre des portes latérales avant et arrière.

Dans les deux implantations définies ci-avant, on minimise avantageusement la longueur du câble électrique CE, et donc on minimise son poids et son encombrement.

On notera que la longueur du câble électrique CE peut varier selon l'option choisie. Ainsi, cette longueur peut être soit grande (typiquement 3 m à 5 m, par exemple), soit petite mais suffisante pour permettre la sortie et le passage de la prise électrique PE au-delà de la feuillure FS et la fermeture de la porte latérale PL (typiquement quelque dizaines de centimètres, par exemple), et dans ce cas on peut prévoir dans le véhicule V une rallonge que l'on vient coupler à la prise électrique PE.

Par ailleurs, bien que cela n'apparaisse pas sur les figures 1 à 3, le câble électrique CE (et son éventuel enrouleur) peu(ven)t être logé(s) dans un boîtier de rangement installé dans le logement interne LI, derrière l'ouverture OL. Un tel boîtier peut éventuellement comprendre un disjoncteur extractible de manière à pouvoir être sorti au moins partiellement en vue d'un ré-enclenchement lorsqu'il a disjoncté.

## Revendications

1. Véhicule (V) comprenant une structure (SV) comprenant une feuillure (FS) délimitant un passage latéral dont l'accès est contrôlé par une porte latérale (PL) et une batterie rechargeable couplée à un câble électrique (CE) comprenant une prise électrique (PE) destinée à être connectée à une prise d'alimentation externe, ladite structure (SV) comprenant aussi un logement interne (LI) communiquant avec l'extérieur par une ouverture (OL) définie dans ladite feuillure (FS) et logeant au moins une partie dudit câble électrique (CE) avec sa prise électrique (PE) dans une position rangée tout en permettant son extraction en vue de connecter ladite prise électrique (PE) à ladite prise d'alimentation, **caractérisé en ce que** ledit logement interne (LI) est défini en-dessous d'un renfoncement (RS) de ladite structure (SV), défini partiellement dans ladite feuillure (FS), partiellement masqué par une poignée d'actionnement de ladite porte latérale (PL) lorsque cette dernière (PL) est fermée, et permettant le passage dudit câble électrique (CE), porte latérale (PL) fermée, lorsque ladite prise électrique (PE) est connectée à ladite prise d'alimentation.

2. Véhicule selon la revendication 1, **caractérisé en ce qu'**il comprend à proximité dudit logement interne (LI) un enrouleur auquel est couplé ledit câble électrique (CE) afin de pouvoir être enroulé/désenroulé.

3. Véhicule selon la revendication 1 ou 2, **caractérisé en ce qu'**il comprend un guide (GC) solidarisé fixement à ladite feuillure (FS), entre ladite ouverture (OL) et ledit renfoncement (RS), et logeant et retenant temporairement une partie dudit câble électrique (CE) tout en la guidant de ladite ouverture (OL) jusqu'audit renfoncement (RS), lorsque ladite prise électrique (PE) est connectée à ladite prise d'alimentation.

4. Véhicule selon l'une des revendications 1 à 3, **caractérisé en ce que** ladite feuillure (FS) définit au-dessus dudit logement interne (LI) un logement additionnel (LA) dans lequel est installé fixement un mécanisme de verrouillage (MV) destiné à immobiliser ladite porte latérale (PL) dans sa position fermée.

5. Véhicule selon la revendication 4, **caractérisé en ce que** ledit guide (GC) est solidarisé fixement à une portion de paroi de ladite feuillure (FS) qui délimite partiellement ledit logement additionnel (LA).

6. Véhicule selon l'une des revendications 1 à 5, **caractérisé en ce que** ledit logement interne (LI) est partiellement délimité par une partie de ladite structure (SV) qui définit une aile arrière (AR).

7. Véhicule selon l'une des revendications 1 à 5, **caractérisé en ce que** ledit logement interne (LI) est partiellement délimité par une partie d'un montant définissant un pied milieu de ladite structure (SV).

8. Véhicule selon l'une des revendications 1 à 7, **caractérisé en ce qu'**il comprend un groupe motopropulseur comprenant au moins une machine motrice électrique utilisant de l'énergie électrique stockée dans ladite batterie rechargeable.

9. Véhicule selon l'une des revendications 1 à 8, **caractérisé en ce qu'**il est de type automobile.

## Patentansprüche

1. Fahrzeug (V) mit einer Struktur (SV), die einen Falz (FS) umfasst, der einen Seitenkanal begrenzt, dessen Zugang durch eine Seitentür (PL) kontrolliert wird, und eine wiederaufladbare Batterie, die mit einem elektrischen Kabel (CE) verbunden ist, das eine elektrische Steckdose (PE) zum Anschluss an eine externe Stromversorgungsbuchse umfasst, wobei die Struktur (SV) ferner ein inneres Gehäuse (LI) umfasst, das mit der Außenseite durch eine Öffnung (OL) in Verbindung steht, die in dem Falz (FS) definiert ist, und das zumindest einen Teil des elektrischen Kabels (CE) mit seiner elektrischen Steckdose (PE) in einer aufgeräumten Position unterbringt, während es zum Anschluss gebracht wird Elektrische Steckdose (PE) an der Stromversorgungsbuchse, **dadurch gekennzeichnet, dass** das innere Gehäuse (LI) unterhalb einer Aussparung (RS) der Struktur (SV) definiert ist, die teilweise in dem Falz (FS) definiert ist, teilweise durch einen Betätigungsgriff der seitlichen Tür (PL) maskiert ist, wenn diese letztere (PL) geschlossen ist, und den Durchgang des elektrischen Kabels (CE) ermöglicht, wobei die seitliche Tür (PL) geschlossen ist, wenn die elektrische Steckdose (PE) mit der Stromversorgungsbuchse verbunden ist.

2. Fahrzeug nach Anspruch 1, **dadurch gekennzeichnet, dass** es in der Nähe des inneren Gehäuses (LI) eine Aufrolleinrichtung aufweist, mit der das elektrische Kabel (CE) gekoppelt ist, um auf- und abgerollt werden zu können.

3. Fahrzeug nach Anspruch 1 oder 2, **dadurch gekennzeichnet, dass** es eine Führung (GC) umfasst, die fest mit dem Falz (FS) zwischen der Öffnung (OL) und der Ausnehmung (RS) verbunden ist und einen Teil des elektrischen Kabels (CE) aufnimmt und vorübergehend hält, während sie ihn von der Öffnung (OL) zu der Ausnehmung (RS) führt, wenn die elektrische Steckdose (PE) mit der Versorgungssteckdose verbunden ist.

4. Fahrzeug nach einem der Ansprüche 1 bis 3, **dadurch gekennzeichnet, dass** der Falz (FS) oberhalb des inneren Gehäuses (LI) ein zusätzliches Gehäuse (LA) definiert, in dem ein Verriegelungsmechanismus (MV) fest angebracht ist, der dazu bestimmt ist, die Seitentür (PL) in ihrer geschlossenen Stellung zu fixieren.

5. Fahrzeug nach Anspruch 4, **dadurch gekennzeichnet, dass** die Führung (GC) fest mit einem Wandabschnitt des Falzes (FS) verbunden ist, der teilweise die zusätzliche Aufnahme (LA) begrenzt.

6. Fahrzeug nach einem der Ansprüche 1 bis 5, **dadurch gekennzeichnet, dass** die innere Aufnahme (LI) teilweise durch einen Teil der Struktur (SV) begrenzt ist, der einen hinteren Flügel (AR) definiert.

7. Fahrzeug nach einem der Ansprüche 1 bis 5, **dadurch gekennzeichnet, dass** die innere Aufnahme (LI) teilweise durch einen Teil eines Pfostens begrenzt ist, der einen Mittelfuß der Struktur (SV) definiert.

8. Fahrzeug nach einem der Ansprüche 1 bis 7, **dadurch gekennzeichnet, dass** es eine Antriebseinheit umfasst, die mindestens eine elektrische Antriebsmaschine umfasst, die elektrische Energie verwendet, die in der wiederaufladbaren Batterie gespeichert ist.

9. Fahrzeug nach einem der Ansprüche 1 bis 8, **dadurch gekennzeichnet, dass** es ein Kraftfahrzeug ist.

## Claims

1. Vehicle (V) comprising a frame (SV) comprising a rebate (FS) defining a lateral passage whose access is on dock through a lateral gate (PL) and a rechargeable battery coupled to an electrical cable (CE) comprising an electrical socket (PE) intended to be connected to an external power supply socket, said frame (SV) also comprising an internal housing (LI) communicating with the outside through an opening (OL) defined in said rebate (FS) and housing at least a part of said electrical cable (CE) with its electrical socket (PE) in a row position while allowing its extraction with a view to connecting said electrical socket (PE) to said power supply socket, **characterised in that** said internal housing (LI) is defined below a recess (RS) of said structure (SV), defined partially in said rebate (FS), partially masked by an actuating handle of said side door (PL) when the latter (PL) is closed, and allowing the passage of said electrical cable (CE), closed side door (PL), when said electrical socket (PE) is connected to said power supply socket.

2. Vehicle according to claim 1, comprising, on the local of said internal housing (LI), a winder to which said electrical cable (CE) is coupled in order to be able to be wound/unwound.

3. Vehicle according to Claim 1 or 2, **characterised in that** it comprises a guide (GC) fixedly attached to the said rebate (FS), between the said opening (OL) and the said indentation (RS), and temporarily housing and retaining a part of the said electric cable (CE) while guiding it from the said opening (OL) to the said indentation (RS), when the said electric outlet (PE) is connected to the said power supply outlet.

4. Vehicle according to one of Claims 1 to 3, **characterised in that** the said rebate (FS) defines, above the said internal housing (LI), an additional housing (LA) in which is installed fixedly a locking mechanism (MV) intended to immobilise the said side door (PL) in its closed position.

5. Vehicle according to claim 4, **characterised in that** said guide (GC) is fixedly attached to a wall portion of said rebate (FS) which partially delimits said additional housing (LA).

6. Vehicle according to one of Claims 1 to 5, **characterised in that** the said internal housing (LI) is partially delimited by a part of the said structure (SV) which defines a rear wing (AR).

7. Vehicle according to one of Claims 1 to 5, **characterised in that** the said internal housing (LI) is partially delimited by a part of an upright defining a middle foot of the said structure (SV).

8. Vehicle according to one of Claims 1 to 7, **characterised in that** it comprises a power train comprising at least one electric drive machine using electrical energy stored in the said rechargeable battery.

9. Vehicle according to one of Claims 1 to 8, **characterised in that** it is of the motor vehicle type.
